# EUROPÄISCHE PATENTANMELDUNG

(11) **EP 3 733 472 A1**
(43) Veröffentlichungstag der Anmeldung: **04.11.2020**
(21) Anmeldenummer: 20172050.5
(22) Anmeldetag: 29.04.2020
(51) Int. Cl.: B60W 20/12, B60W 20/16, B60W 20/13, B60W 50/00, B60W 40/09, B60K 6/48

(54) **VERFAHREN ZUM BETREIBEN EINES FAHRZEUGS MIT EINEM HYBRIDANTRIEBSSTRANGSYSTEM UND HYBRIDANTRIEBSSTRANGSYSTEM**

(30) Priorität: 02.05.2019 DE 102019111391
(71) Anmelder: Technische Universität Darmstadt, 64289 Darmstadt (DE)
(72) Erfinder: Vadamalu, Raja Sangili, 64287 Darmstadt (DE); Beidl, Christian, 64285 Darmstadt (DE); Riegelbeck, Christian, 64832 Babenhausen (DE)
(74) Vertreter: Habermann Intellectual Property Partnerschaft von Patentanwälten mbB

(57) **Zusammenfassung**

Bei einem Verfahren zum Betreiben eines Fahrzeugs mit einem Hybridantriebsstrangsystem (1), wobei das Hybridantriebsstrangsystem (1) einen Verbrennungsmotor (2) und eine elektrisch betriebene Drehmomentmaschine (3) aufweist, die energieübertragend mit einer Energiespeichereinrichtung (7) verbunden ist, und wobei der Verbrennungsmotor (2) und die Drehmomentmaschine (3) von einer Steuereinrichtung (8) gesteuert und über ein Hybridgetriebe (4) mit einem Abtriebselement (5) verbunden sind, wobei der Betrieb des Hybridantriebsstrangsystems (1) bei Berücksichtigung der abgeschätzten erwarteten Fahrzeugantriebsleistung unter Verwendung eines Optimierungsverfahrens im Hinblick auf die angestrebte Ladezustandstrajektorie (26) optimiert und von der Steuereinrichtung (8) gesteuert wird, wird für vorab festgelegte ungünstige Betriebsereignisse jeweils mindestens eine Optimierungsnebenbedingung vorgegeben. Ausgehend von der abgeschätzten erwarteten Fahrzeugantriebsleistung wird abgeschätzt, ob innerhalb eines Ereignisvorhersagezeitraums ein ungünstiges Betriebsereignis eintreten wird. Im Falle eines voraussichtlich eintretenden ungünstigen Betriebsereignisses über eine zeitlich begrenzte Ereignisreaktionsdauer t_{ER} hinweg mindestens eine diesem ungünstigen Betriebsereignis zugeordnete Optimierungsnebenbedingung für die Steuerung des Betriebs des Hybridantriebstrangsystems (1) vorgegeben.

## Beschreibung

Die Erfindung betrifft ein Verfahren zum Betreiben eines Fahrzeugs mit einem Hybridantriebsstrangsystem, wobei das Hybridantriebsstrangsystem einen nicht elektrisch betriebenen Antriebsmotor und eine elektrisch betriebene Drehmomentmaschine aufweist, die energieübertragend mit einer Energiespeichereinrichtung verbunden ist, und wobei der Antriebsmotor und die Drehmomentmaschine von einer Steuereinrichtung gesteuert und über ein Hybridgetriebe mit einem Abtriebselement verbunden sind, wobei das Verfahren umfasst, dass für einen Vorhersagezeitraum ausgehend von einem erwarteten Fahrwegverlauf eine erwartete Fahrwegslast abgeschätzt wird, dass unter Berücksichtigung der erwarteten Fahrwegslast eine erwartete Fahrzeugantriebsleistung abgeschätzt wird, dass eine angestrebte Ladezustandstrajektorie für einen zeitlichen Verlauf des Ladezustands der Energiespeichereinrichtung ermittelt wird, und dass der Betrieb des Hybridantriebsstrangsystems bei Berücksichtigung der abgeschätzten erwarteten Fahrzeugantriebsleistung unter Verwendung eines Optimierungsverfahrens im Hinblick auf die angestrebte Ladezustandstrajektorie optimiert und von der Steuereinrichtung gesteuert wird.

Der Antriebsstrang eines Fahrzeuges kann alle Komponenten umfassen, die im Fahrzeug die Leistung für den Antrieb generieren und bis auf den Fahrweg des Fahrzeugs übertragen.

Ein Antriebsstrang kann beispielsweise eine starre Antriebswelle oder aber flexible Antriebsriemen zur Übertragung eines das Fahrzeug antreibenden Drehmoments aufweisen. Fahrzeuge können mit verschiedenen drehmomenterzeugenden Einrichtungen betrieben werden, mit welchen aus einer in dem Fahrzeug gespeicherten Energieform ein Drehmoment für eine das Fahrzeug antreibende Antriebsleistung erzeugt werden kann. Dabei wird regelmäßig versucht, dass die betreffende drehmomenterzeugende Einrichtung möglichst effizient betrieben wird, um ausgehend von der in dem Fahrzeug gespeicherten Energie das Fahrzeug möglichst lange bzw. möglichst weit antreiben zu können.

Bei Fahrzeugen mit einem Hybridantriebsstrangsystem weist das Fahrzeug zwei unterschiedliche drehmomenterzeugende Einrichtungen auf, die mit zwei unterschiedlichen Energieformen betrieben werden können. Während des Betriebs des Fahrzeugs kann durch eine in geeigneter Weise eingerichtete Steuerung die für eine aktuelle Fahrsituation oder im Hinblick auf ein vorgegebenes Zielkriterium jeweils günstige Energieform bzw. eine vorteilhaft einsetzbare drehmomenterzeugende Einrichtung verwendet werden. Dabei ist es in vielen verschiedenen Betriebssituationen vorteilhaft, wenn die jeweiligen Anteile der beiden drehmomenterzeugenden Einrichtungen an die jeweiligen Fahrsituationen, an individuelle Fahrcharakteristiken oder an weitere Zielkriterien kontinuierlich angepasst werden. Dabei kann zeitweise auch eine der beiden drehmomenterzeugenden Einrichtungen abgeschaltet sein und die für die gewünschte Fahrsituation erforderliche Antriebsleistung ausschließlich von der nicht abgeschalteten drehmomenterzeugenden Einrichtung erzeugt und zur Verfügung gestellt werden.

Regelmäßig wird auch bei Hybridantriebsstrangsystemen eine möglichst effiziente Nutzung der insgesamt zur Verfügung stehenden Energie im Vordergrund stehen und eine wichtige Zielgröße für die Steuerung eines optimierten Betriebs des Hybridantriebsstrangsystems sein. Zudem wird oftmals auch versucht, weitere Parameter wie beispielsweise eine Reduktion einer unerwünschten Schadstoffemission, eine Erhöhung einer ausschließlich elektrisch betriebenen Reichweite oder eine Verbesserung oder möglichst lange Erhaltung des Gesundheitszustands der Energiespeichereinrichtung zu optimieren.

Bei vielen Fahrzeugen mit einem Hybridantriebsstrangsystem weist das Hybridantriebsstrangsystem einen Verbrennungsmotor als nicht elektrisch betriebenen Antriebsmotor und mindestens eine elektrisch betriebene Drehmomentmaschine auf. Der Verbrennungsmotor kann üblicherweise mit einem flüssigen Kraftstoff wie beispielsweise Benzinkraftstoff betrieben werden. Die elektrisch betriebene Drehmomentmaschine kann eine elektrische Maschine, beispielsweise ein Gleichstrommotor oder eine Wechselstrommaschine sein, wobei die Drehmomentmaschine auch als Generator betrieben werden kann. Die Drehmomentmaschine ist energieübertragend mit einer elektrischen Energiespeichereinrichtung verbunden, üblicherweise ein elektrisches Batteriesystem oder eine Brennstoffzelle. Bei einem Hybridantrieb kann die Antriebsleistung dabei wahlweise von dem Antriebsmotor, von der Drehmomentmaschine oder gleichzeitig von beiden erzeugt werden, wobei bei einer gleichzeitigen Nutzung des Antriebsmotor und der Drehmomentmaschine der jeweilige Anteil an der insgesamt auf ein Abtriebselement übertragenen Antriebsleistung variiert und an eine vorgegebene Zielgröße angepasst werden kann. Zudem kann die Drehmomentmaschine zeitweilig auch als Generator betrieben werden, um beispielsweise während eines Bremsvorgangs einen Anteil der Bewegungsenergie des Fahrzeugs in elektrische Energie umzuwandeln und in die hierfür geeignete Energiespeichereinrichtung einzuspeisen. Falls das Hybridantriebsstrangsystem mehrere elektrisch betriebene Drehmomentmaschinen aufweist können die mehreren Drehmomentmaschinen oftmals unabhängig voneinander angesteuert und betrieben werden, wobei einzelne oder alle Drehmomentmaschinen auch energieübertragend mit der Energiespeichereinrichtung verbunden sein können, um Bewegungsenergie in elektrische Energie umwandeln und speichern zu können. Das Hybridantriebsstrangsystem kann einen leistungsverzweigten Antriebsstrang aufweisen, bei dem mehrere elektrisch betriebene Drehmomentmaschinen gekoppelt sind bzw. wahlweise mit einer gegebenenfalls unabhängig voneinander vorgegeben Leistung auf das Abtriebselement einwirken können.

Der Betrieb des Hybridantriebsstrangsystems wird von der Steuereinrichtung gesteuert. Dabei wird üblicherweise mit Hilfe eines kontinuierlich durchgeführten Optimierungsverfahrens versucht, den Betrieb im Hinblick auf eine oder mehrere Zielgrößen wie beispielsweise den Energieverbrauch oder den Einsatz der aktuell im Fahrzeug gespeicherten Energieformen zu optimieren. In vielen Fällen ist dabei der Ladezustand eine vorteilhafte Zielgröße für die Optimierung. Durch die Vorgabe einer angestrebten Ladezustandstrajektorie für einen zeitlichen Verlauf des Ladezustandes der Energiespeichereinrichtung kann zu jedem Zeitpunkt des Betriebs der Anteil der elektrisch betriebenen Drehmomentmaschine und damit einhergehend der Anteil des Verbrennungsmotors an der insgesamt benötigten Antriebsleistung vorgegeben und angesteuert werden.

Die Vorgabe einer angestrebten Ladezustandstrajektorie kann im Hinblick auf die jeweilige Zielgröße dadurch verbessert werden, dass während des Betriebs des Hybridantriebsstrangsystems eine Abschätzung der innerhalb eines Vorhersagezeitraums erwarteten Fahrwegslast vorgenommen und auf dieser Grundlage eine erwartete Fahrzeugantriebsleistung abgeschätzt wird, die während des Vorhersagezeitraums voraussichtlich benötigt wird, um das Fahrzeug entsprechend der Vorgaben eines Fahrers zu bewegen. Für die Abschätzung einer innerhalb des bevorstehenden Vorhersagezeitraums erwarteten Fahrwegslast können beispielsweise mit Hilfe von Globalpositionssensoren (GPS) und digitalen Landkartensystemen der aktuelle Fahrzeugort und ein voraussichtlich ausgewählter Fahrweg ermittelt werden. Dann kann beispielsweise anhand der von für den voraussichtlich ausgewählten Fahrweg ermittelten Strecken- und Geschwindigkeitsprofilen, insbesondere von Höhenprofilen und Geschwindigkeitsprofilen die voraussichtlich auftretende Fahrwegslast als eine der Kenngrößen für eine innerhalb des Vorhersagezeitraums erwartete Fahrzeugantriebsleistung abgeschätzt werden. Ausgehend von der abgeschätzten Fahrzeugantriebsleistung, die voraussichtlich innerhalb des Vorhersagezeitraums von dem Hybridantriebsstrangsystem aufgebracht werden muss, können dann mit geeigneten Steuerstrategien und Leistungsmanagementschemata die jeweilige Verwendung der elektrischen Drehmomentmaschine und des Verbrennungsmotors so vorgegeben und angesteuert werden, dass die eine oder mehreren Zielgrößen des dafür eingesetzten Optimierungsverfahrens bestmöglich erreicht werden, wobei für die auf das Abtriebselement übertragene Antriebsleistung üblicherweise ein möglichst geringer Energieverbrauch angestrebt wird.

Die in der Praxis häufig verwendeten Optimierungsverfahren setzten eine möglichst realitätsnahe Modellierung des Betriebs des Hybridantriebsstrangsystems während der auftretenden Fahrsituationen voraus. In vielen Fällen wird dabei eine multikriterielle Optimierung durchgeführt. Mit Hilfe einer Skalarisierung kann die Optimierung mit einem linearen oder nicht-linearen Optimierungsverfahren durchgeführt werden. Um einen möglichst effizienten Betrieb des Hybridantriebsstrangsystems zu ermöglichen ist jedoch sowohl für die Modellierung als auch für die Optimierung ein erheblicher Aufwand erforderlich. Unter günstigen Bedingungen kann dann auf einem erwarteten Fahrweg beispielsweise der für die Bewegung des Fahrzeugs entlang des Fahrwegs benötigte Energieaufwand optimiert, bzw. minimiert werden, wenn der Energieaufwand als eine Zielgröße der Optimierung vorgegeben wird. Es können zusätzlich weitere Zielgrößen vorgegeben und optimiert werden.

Es ist ebenfalls bekannt und Gegenstand intensiver Forschungstätigkeiten, neben einem möglichst geringen Energieverbrauch gleichzeitig weitere Zielgrößen für die Optimierung zu berücksichtigen und beispielsweise während des Betriebs zusätzlich eine möglichst geringe Schadstoffemission zu erzeugen. Die jeweilige Schadstoffemission kann sowohl bei der Modellierung als auch bei den Optimierungsverfahren berücksichtigt werden, wobei dadurch der für die Optimierung insgesamt erforderliche Aufwand deutlich erhöht wird. Weitere Zielgrößen können beispielsweise ein Temperaturmanagement für das Hybridantriebsstrangsystem oder eine Zustandsoptimierung der Energiespeichereinrichtung sein.

Während des Betriebs des Hybridantriebsstrangsystems lässt sich bei einer erwartungsgemäßen Fahrzeugbewegung entlang eines vorgegebenen bzw. im Rahmen der Abschätzung zutreffend ermittelten Fahrwegs oftmals der Energieverbrauch minimieren und der Betrieb des Hybridantriebsstrangsystems effizient gestalten. Je nach dem gewählten Optimierungsverfahren können zudem auch die Schadstoffemission minimiert bzw. weitere Zielgrößen für einen optimierten Betrieb des Hybridantriebsstrangsystems berücksichtigt werden.

Allerdings treten in der Praxis während des Betriebs des Hybridantriebsstrangsystems oftmals unvorhergesehene Ereignisse auf, die zu einer Störung des als optimal angesehenen Betriebs des Hybridantriebsstrangsystems führen. So können beispielsweise durch rote Ampeln, Staus oder unerwartete Fahrerwünsche ungünstige Betriebsereignisse eintreten, die zu einem von dem als optimal angesehenen Betrieb abweichenden ungünstigen Betrieb des Hybridantriebsstrangsystems führen und beispielsweise einen erhöhten Energieverbrauch und eine erhöhte Schadstoffemission herbeiführen können. Eine vollständige Modellierung solcher ungünstigen Betriebsereignisse und deren Berücksichtigung bei der Optimierung ist kaum möglich und jedenfalls mit einem ganz erheblichen Aufwand verbunden, sodass eine vollständige Modellierung unter Berücksichtigung solcher ungünstiger Betriebsereignisse ist kaum möglich und jedenfalls mit einem ganz erheblichen Aufwand verbunden, sodass sich solche ungünstigen Betriebsereignisse bei vielen Optimierungsverfahren nachteilig auswirken.

Es wird deshalb als eine Aufgabe der vorliegenden Erfindung angesehen, ein eingangs genanntes Verfahren so weiterzuentwickeln, dass auch ungünstige Betriebsereignisse mit geringem Aufwand von dem Optimierungsverfahren berücksichtigt und ein möglichst vorteilhafter Betrieb des Hybridantriebsstrangsystems erreicht werden kann.

Diese Aufgabe wird erfindungsgemäß dadurch gelöst, dass für vorab festgelegte ungünstige Betriebsereignisse jeweils mindestens eine Optimierungsnebenbedingung vorgegeben wird, dass ausgehend von der abgeschätzten erwarteten Fahrzeugantriebsleistung abgeschätzt wird, ob innerhalb eines Ereignisvorhersagezeitraums ein ungünstiges Betriebsereignis eintreten wird, und dass im Falle eines voraussichtlich eintretenden ungünstigen Betriebsereignisses über eine zeitlich begrenzte Ereignisreaktionsdauer hinweg mindestens eine diesem ungünstigen Betriebsereignis zugeordnete Optimierungsnebenbedingung für die Steuerung des Betriebs des Hybridantriebstrangsystems vorgegeben wird. Ungünstige Betriebsereignisse können beispielsweise Gangwechsel des Hybridgetriebes während des Betriebs des Verbrennungsmotors oder eine demnächst erforderliche Zuschaltung des Verbrennungsmotors nach einer über eine längere Dauer ausschließlich durch die Drehmomentmaschine erzeugten Antriebsleistung sein. Durch eine geeignet vorgegebene Optimierungsnebenbedingung kann für jedes ungünstige Betriebsereignis die ungünstige Betriebssituation entweder vermieden werden oder in eine weniger ungünstige Betriebssituation überführt werden.

So kann beispielsweise erreicht werden, dass eine unerwünscht hohe Schadstoffemission des Verbrennungsmotors bei einem Gangwechsel deutlich reduziert wird, indem als Optimierungsnebenbedingung eine zeitlich begrenzte Veränderung einer Zielgröße der Optimierung bewirkt wird. Um beispielsweise kurzzeitig einen erhöhten Anteil der von der Drehmomentmaschine erzeugten Antriebsleistung zu bewirken kann als Optimierungsnebenbedingung der Ladezustand der angestrebte Energiespeichereinrichtung für einen begrenzten Zeitraum deutlich herabgesetzt werden. Im Rahmen des Optimierungsverfahrens wird dann der Anteil der elektrischen Antriebsleistung erhöht, da aufgrund der Optimierungsnebenbedingung aus der Energiespeichereinrichtung elektrische Energie entnommen werden kann. Gleichzeitig wird der Anteil der von dem Verbrennungsmotor erzeugten Antriebsleistung entsprechend verringert, wodurch beispielsweise die Schadstoffemission des Verbrennungsmotors reduziert werden kann.

Da die zeitlich begrenzte Ereignisreaktionsdauer deutlich kürzer als die gesamte Fahrtdauer vorgegeben werden kann und beispielsweise weniger als eine Minute oder lediglich einige Sekunden betragen kann, kann ohne weiteres über die Fahrdauer hinweg die angestrebte Ladezustandstrajektorie so angepasst werden, dass über die Fahrdauer hinweg die durch die ungünstigen Betriebsereignisse bewirkten Abweichungen von der angestrebten Ladezustandstrajektorie sehr gering sind und insbesondere am Ende der Fahrtdauer der angestrebte Ladezustand erreicht wird. Gleichzeitig können durch das frühzeitige Erkennen von ungünstigen Betriebsereignissen deren nachteiligen Auswirkungen gemildert werden, ohne dass diese nachteiligen Auswirkungen vollständig modelliert und bei dem Optimierungsverfahren als weitere Parameter bzw. Zielgrößen dauerhaft berücksichtigt werden müssten.

Der Vorhersagezeitraum wird üblicherweise in Abhängigkeit der verwendeten Optimierung vorgegeben, wobei der Vorhersagezeitraum auch dynamisch an wechselnde Fahrsituationen angepasst werden kann. Auch der Ereignisvorhersagezeitraum kann entweder vorab einheitlich für alle Fahrsituationen vorgegeben sein oder aber dynamisch in Abhängigkeit von beispielsweise der Fahrsituation oder einer aktuell erfassten Betriebskenngröße vorgegeben werden. So kann beispielsweise der Ereignisvorhersagezeitraum bei einer gleichmäßigen Fahrt auf einer Autobahn ohne nennenswertes Verkehrsaufkommen wesentlich länger vorgegeben sein als bei einer sich ständig ändernden Fahrsituation in einer Stadt während einer Hauptverkehrszeit. Der Ereignisvorhersagezeitraum kann entweder dem Vorhersagezeitraum entsprechen oder aber entweder grundsätzlich oder beispielsweise in Abhängigkeit von den einzelnen ungünstigen Betriebsereignissen von dem Vorhersagezeitraum abweichen.

Die Ereignisreaktionsdauer ist zweckmäßigerweise ausreichend lange vorgegeben, um die mit der Optimierungsnebenbedingung angestrebte Beeinflussung des Optimierungsverfahrens und letztendlich des Betriebs des Hybridantriebsstrangsystems zu erreichen.

In vorteilhafter Weise ist vorgesehen, dass mindestens ein vorab festgelegtes ungünstiges Betriebsereignis eine erhöhte Schadstoffemission bewirken würde, und dass mit der zugeordneten Optimierungsnebenbedingung eine demgegenüber reduzierte Schadstoffemission bewirkt wird. Eine vollständige Erfassung und Modellierung der Schadstoffemissionen während des Betriebs des Hybridantriebsstrangsystems sowie eine vollständige und kontinuierliche Berücksichtigung der Schadstoffemission durch zusätzliche Parameter bzw. Zielgrößen bei der Optimierung wäre mit einem ganz erheblichen Mehraufwand im Vergleich zu den aktuell verwendeten Optimierungsverfahren verbunden. Die für die Schadstoffemissionen besonders ungünstigen Betriebsereignisse sind jedoch oftmals nur von vergleichsweise kurzer Dauer und können im Voraus durch Messungen an einem Hybridantriebsstrangsystem in einem Fahrzeugprüfstand vergleichsweise gut erfasst und charakterisiert werden. Gegebenenfalls können die benötigten Messungen auch in einem Motorprüfstand oder Antriebsstrangprüfstand durchgeführt werden, wodurch sich der Aufwand weiter reduzieren lässt. Für eine Anzahl von ungünstigen Betriebsereignissen können jeweils eine oder sogar mehrere Optimierungsnebenbedingungen ermittelt und vorgegeben werden, mit deren Hilfe derart auf das Optimierungsverfahren eingewirkt wird, dass die Schadstoffemission deutlich reduziert werden kann, ohne dass dadurch der Energieverbrauch merklich erhöht oder der Ladezustand des Energiespeichersystems über einen nennenswerten Zeitraum nachteilig beeinflusst wird.

Einer Ausgestaltung des Erfindungsgedankens zufolge ist vorgesehen, dass anhand einer vorgegebenen Priorisierung eine der diesen ungünstigen Betriebsereignissen zugeordneten Optimierungsnebenbedingungen ausgewählt und für die Steuerung des Betriebs des Hybridantriebsstrangsystems vorgegeben wird, falls dem ermittelten ungünstigen Betriebsereignis mehr als eine Optimierungsnebenbedingung zugeordnet ist. Durch eine geeignete Priorisierung, die im Voraus beispielsweise anhand von Messungen an einem Hybridantriebsstrangsystem in einem Fahrzeugprüfstand entwickelt und vorgegeben werden kann, lässt sich in einfacher Weise und ohne nennenswerten Aufwand diejenige Optimierungsnebenbedingung auswählen, mit welcher die nachteiligen Auswirkungen des ungünstigen Betriebsereignisses bestmöglich reduziert oder vermieden werden können.

In gleicher Weise ist es gemäß einer weiteren Ausgestaltung des Erfindungsgedankens vorgesehen, dass anhand einer vorgegebenen Priorisierung eine zugeordnete Optimierungsnebenbedingung ausgewählt und für die Steuerung des Betriebs des Hybridantriebsstrangsystems vorgegeben wird, falls mehr als ein ungünstiges Betriebsereignis innerhalb des Ereignisvorhersagezeitraums ermittelt wird. Insbesondere innerhalb einer städtischen Umgebung können unvorhersehbare Ereignisse wie sich plötzlich ändernde Lichtsignale von Ampeln, andere Verkehrsteilnehmer oder rasch wechselnde Fahrwege dazu führen, dass innerhalb des Ereignisvorhersagezeitraums oder sogar innerhalb der Ereignisreaktionsdauer zwei oder mehr ungünstige Betriebsereignisse vorhergesagt bzw. erwartet werden, sodass für verschiedene ungünstige Betriebsereignisse gegebenenfalls unterschiedliche oder sogar widersprüchliche Optimierungsnebenbedingungen vorgesehen wären und mit einer geeigneten üblicherweise wahrscheinlichkeitsbasierten Priorisierung diejenige Optimierungsnebenbedingung identifiziert und ausgewählt werden kann, die für die zwei oder mehreren ungünstigen Betriebsereignisse deren nachteilige Auswirkungen bestmöglich reduzieren kann.

Die Priorisierung kann dabei beispielsweise durch eine eindimensionale Gewichtung der verschiedenen Optimierungsnebenbedingungen vorgegeben werden. Es ist ebenfalls möglich, eine mehrdimensionale Priorisierung vorab zu ermitteln und vorzugeben, sodass die Priorisierung für unterschiedliche Zielgrößen angepasst und vorgegeben werden kann. Es ist weiterhin denkbar, dass während einer Fahrsituation mindestens eine die Fahrsituation beschreibende Kenngrößen erfasst wird und in Abhängigkeit von der mindestens einen erfassten Kenngröße eine daran angepasste oder für die erfasste Kenngröße vorgesehene Priorisierung für die Auswahl der Optimierungsnebenbedingung verwendet wird.

Im Hinblick auf eine nachträgliche Anpassung und Verbesserung des erfindungsgemäßen Verfahrens ist optional vorgesehen, dass während des Betriebs des Hybridantriebsstrangsystems Betriebskenngrößen erfasst werden, und dass ausgehend von den erfassten Betriebskenngrößen die Priorisierung der zugeordneten Optimierungsnebenbedingungen überprüft und gegebenenfalls geändert wird. Die Betriebskenngrößen wie beispielsweise Geschwindigkeiten, Beschleunigungen oder auch bevorzugte Fahrwegentscheidungen ermöglichen es, eine individuelle Fahrweise zu erkennen und in Abhängigkeit von den einzelnen ungünstigen Betriebsereignissen die Priorisierung der mehreren möglichen Optimierungsnebenbedingungen zu verändern und anzupassen. So können beispielsweise eine verbrauchsorientierte Fahrweise oder eine sportliche Fahrweise eines Fahrers anhand der während einer Fahrzeugbewegung entlang eines Fahrwegs erfassten Betriebskenngrößen identifiziert bzw. unterschieden werden, um anschließend die Priorisierung der mehreren Optimierungsnebenbedingungen zu verändern und an die individuelle Fahrweise anzupassen. Die Betriebskenngrößen können dabei mit geeigneten Sensoren erfasst oder aber auf der Grundlage anderer Kenngrößen abgeschätzt oder ermittelt werden. Es ist ebenfalls möglich, dass ein Fahrer über ein Bordkommunikationssystem eine von dem Fahrer gewünschte Fahrweise vor oder während einer Fahr vorgibt und die Priorisierung entsprechend angepasst wird.

Eine erfasste Betriebskenngröße kann auch eine Zielgröße wie beispielsweise der tatsächliche mit dem Betrieb des Hybridantriebsstrangsystems bewirkte Energieverbrauch oder eine messbare Schadstoffemission sein, sodass während des Betriebs die Auswirkungen des erfindungsgemäßen Verfahrens erfasst und gegebenenfalls für einen geregelten Eingriff in die Optimierung des Betriebs berücksichtigt werden können.

Es ist ebenfalls denkbar, dass eine oder mehrere Betriebskenngrößen erfasst und für eine in zeitlichen Abständen erfolgende oder kontinuierliche Anpassung des Optimierungsverfahrens verwendet werden. Auf diese Weise können die tatsächlichen Auswirkungen der über die zeitlich begrenzte Ereignisreaktionsdauer hinweg erfolgenden Beeinflussung des Optimierungsverfahrens auf den Betrieb des Hybridantriebstrangsystems erfasst oder von den Betriebskenngrößen ausgehend ermittelt werden. Durch einen Vergleich von der während einer Fahrsituation tatsächlich erfolgenden Reduzierung der nachteiligen Auswirkungen der ungünstigen Betriebsereignisse mit vorab erfassten nachteiligen Auswirkungen, die ohne die Anwendung des erfindungsgemäßen Verfahrens eintreten, kann die Effizienz oder auch die Sinnhaftigkeit einzelner Optimierungsnebenbedingungen überprüft und gegebenenfalls durch eine veränderte Priorisierung angepasst werden.

Es ist grundsätzlich einer Ausgestaltung des Erfindungsgedankens zufolge möglich, dass für jede Optimierungsnebenbedingung eine zugeordnete Ereignisreaktionsdauer vorgegeben ist. Die Ereignisreaktionsdauer gibt diejenige Zeitdauer vor, während der nach dem Feststellen eines bevorstehenden ungünstigen Betriebsereignisses die zugeordnete Optimierungsnebenbedingung bei der Durchführung des Optimierungsverfahrens vorgegeben wird. Bei der Ereignisreaktionsdauer kann es sich um eine für alle Optimierungsnebenbedingungen gleich vorgegebene und identisch übereinstimmende Ereignisreaktionsdauer handeln. Es ist ebenfalls möglich, dass für jedes ungünstige Betriebsereignis und gegebenenfalls für jede einzelne Optimierungsnebenbedingung eine individuelle Ereignisreaktionsdauer vorgegeben ist, während der die Optimierungsnebenbedingung vorgegeben und bei der Durchführung der Optimierung berücksichtigt werden muss.

Es ist ebenfalls denkbar, dass im Falle eines voraussichtlich eintretenden ungünstigen Betriebsereignisses während einer vorgegebenen maximalen Reaktionsdauer Optimierungskenngrößen erfasst werden, und dass die Ereignisreaktionsdauer beendet wird, sobald die erfassten Optimierungskenngrößen ein vorgegebenes Ereignisreaktionsbeendigungskriterium erfüllen. So kann beispielsweise durch eine Erfassung und Auswertung von Betriebskenngrößen abgeschätzt werden, ob die mit der Optimierungsnebenbedingung angestrebte Beeinflussung des Betriebs des Hybridantriebsstrangsystems bereits bewirkt oder in ausreichender Weise eingeleitet wurde, sodass es ab dann nicht mehr notwendig ist, mit der Vorgabe einer Optimierungsnebenbedingung das Optimierungsverfahren weiter zu beeinflussen. Es ist ebenfalls möglich, bei Bedarf die Ereignisreaktionsdauer zu verlängern, um den mit der Optimierungsnebenbedingung angestrebten Effekt herbeizuführen oder gegebenenfalls zu verstärken.

Die Erfindung betrifft auch ein Hybridantriebsstrangsystem für ein Fahrzeug, wobei das Hybridantriebsstrangsystem eine Steuereinrichtung, einen nicht elektrisch betriebenen Antriebsmotor und eine elektrisch betriebene Drehmomentmaschine aufweist, die energieübertragend mit einer Energiespeichereinrichtung verbunden ist, und wobei der Antriebsmotor und die Drehmomentmaschine von der Steuereinrichtung gesteuert und über ein Hybridgetriebe mit einem Abtriebselement verbunden sind. Das Hybridantriebsstrangsystem kann dabei wie eingangs beschrieben ausgebildet sein und beispielsweise einen Verbrennungsmotor sowie mehrere elektrisch betriebene Drehmomentmaschinen in einem leistungsverzweigten Antriebsstrang aufweisen. Erfindungsgemäß ist vorgesehen, dass die Steuereinrichtung derart eingerichtet ist, dass bei einem Betrieb des Hybridantriebsstrangsystems ein vorangehend beschriebenes Verfahren durchgeführt wird.

Nachfolgend werden verschiedene Ausgestaltungen des Erfindungsgedankens näher erläutert, die in der Zeichnung exemplarisch dargestellt sind. Es zeigt:
Figur 1 eine schematische Darstellung eines Hybridantriebsstrangsystems mit einem Verbrennungsmotor, mit einer elektrischen Drehmomentmaschine, mit einer Energiespeichereinrichtung und mit einer Steuereinrichtung,
Figur 2 eine schematische Darstellung eines erfindungsgemäßen Verfahrensablaufs zum Betreiben des in Figur 1 dargestellten Hybridantriebsstrangsystems,
Figur 3 eine schematische Darstellung eines Höhenprofils eines Fahrwegs als Beispiel für eine Kenngröße einer Fahrweglast,
Figur 4 eine schematische Darstellung eines Geschwindigkeitsprofils eines Fahrwegs,
Figur 5 eine schematische Darstellung einer Ladezustandstrajektorie,
Figuren 6 bis 11 jeweils eine schematische Darstellung eines zeitlichen Verlaufs einzelner Kenngrößen während eines ungünstigen Betriebsereignisses, wobei das ungünstige Betriebsereignis einen mehrfachen Gangwechsel des Hybridantriebsstrangsystems beinhaltet, und
Figuren 12 bis 17 jeweils eine schematische Darstellung eines zeitlichen Verlaufs einzelner Kenngrößen während eines ungünstigen Betriebsereignisses, wobei das ungünstige Betriebsereignis eine Steigerung der Fahrzeuggeschwindigkeit nach einer längeren Fahrt mit abgeschaltetem Verbrennungsmotor beinhaltet.

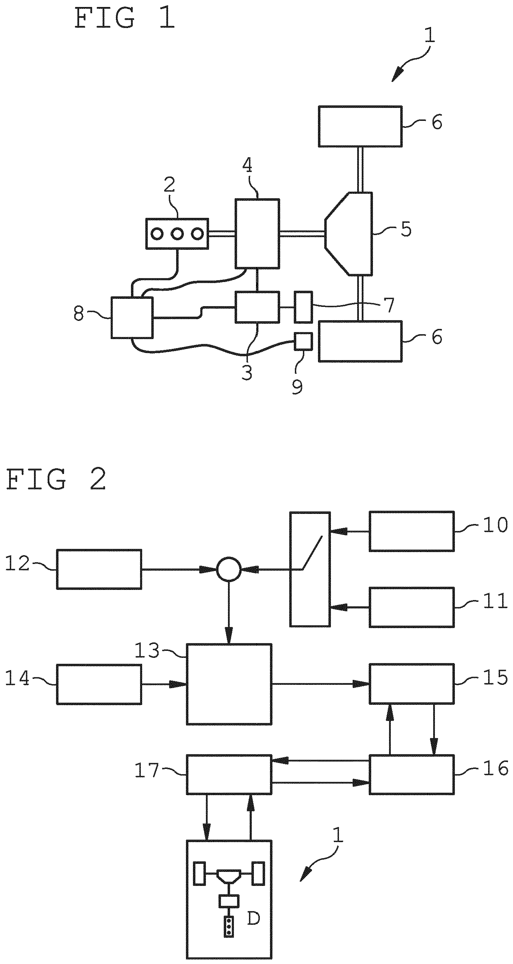

In Figur 1 ist exemplarisch eine erfindungsgemäße Ausgestaltung eines Hybridantriebsstrangsystems 1 dargestellt. Das Hybridantriebsstrangsystem 1 weist einen Verbrennungsmotor 2 und eine elektrisch betriebene Drehmomentmaschine 3 auf, die über ein gemeinsames Hybridgetriebe 4 mit einem Abtriebselement 5 verbunden sind, über welches ein mit dem Hybridantriebsstrangsystem 1 erzeugtes Drehmoment auf zwei Antriebsräder 6 eines nicht näher dargestellten Fahrzeugs übertragen werden kann. Die elektrische Drehmomentmaschine 3 ist energieübertragend mit einer elektrischen Energiespeichereinrichtung 7 verbunden. Die elektrische Drehmomentmaschine 3 kann sowohl zum Antreiben der Antriebsräder 6 verwendet werden und Energie aus der Energiespeichereinrichtung 7 in Bewegungsenergie des Fahrzeugs umwandeln, oder aber als Generator verwendet werden und Bewegungsenergie des Fahrzeugs oder durch den Verbrennungsmotor 2 erzeugte Bewegungsenergie in elektrische Energie umwandeln und der Energiespeichereinrichtung 7 zuführen. Bei der Drehmomentmaschine 3 kann es sich beispielsweise um einen auch als Generator betreibbaren Gleichstrommotor handeln. Es ist ebenfalls möglich, mehrere elektrische Drehmomentmaschinen 3 in das Hybridantriebsstrangsystem 1 einzubinden. An Stelle des Verbrennungsmotors 2 kann auch ein anderer nicht elektrisch betriebene Antriebsmotor verwendet werden.

Das Hybridantriebsstrangsystem 1 weist eine Steuereinrichtung 8 auf. Die Steuereinrichtung 8 ist signalübertragend mit dem Verbrennungsmotor 2, mit der Drehmomentmaschine 3 und mit dem Hybridgetriebe 4 verbunden, wobei mit der Steuereinrichtung 8 der jeweilige Betrieb des Verbrennungsmotors 2, der Drehmomentmaschine 3 und des Hybridgetriebes 4 gesteuert werden kann. Die Steuereinrichtung 8 kann weiterhin mit mindestens einem Sensor 9 verbunden sein, mit welchem Betriebskenngrößen wie beispielsweise die aktuelle Fahrzeuggeschwindigkeit etc. erfasst und an die Steuereinrichtung 8 übertragen werden können. Die Steuereinrichtung 8 ist dazu eingerichtet, das nachfolgend beschriebene erfindungsgemäße Verfahren zum Betreiben des Hybridantriebsstrangsystems 1 durchzuführen.

In Figur 2 ist schematisch ein Ablauf des erfindungsgemäßen Verfahrens dargestellt. In einem Fahrwegermittlungsschritt wird für die Dauer eines Vorhersagezeitraums ein erwarteter Fahrwegverlauf ermittelt. Dabei können Informationen entweder direkt von einem aktivierten Navigationsgerät 10 oder von einer Kombination 11 aus Globalpositionssensoren (GPS) und digitalen Landkartensystemen bzw. aus dem aktuellen Fahrzeugort und einem voraussichtlich ausgewählten Fahrweg zusammengeführt werden. Mit Hilfe eines weiteren Moduls 12 wird der Vorhersagezeitraum At vorgegeben, der bei einfachen Varianten einer fest vorgegebenen Zeitdauer entspricht, aber bei komplexeren Varianten des erfindungsgemäßen Verfahrens auf der Grundlage der ermittelten Fahrwegsinformationen und weiteren die Fahrsituation beschreibende Kenngrößen wie beispielsweise der Geschwindigkeit des Fahrzeugs ermittelt und vorgegeben werden kann.

Aus dem abgeschätzten Fahrwegverlauf und weiteren Kenngrößen des Fahrwegs, beispielsweise einem Höhenprofil des Fahrwegs über den Vorhersagezeitraum hinweg kann eine erwartete Fahrwegslast abgeschätzt werden, auf deren Grundlage die voraussichtlichen Leistungsanforderungen ermittelt werden können, welche von einem Fahrer des Fahrzeugs für die gewünschte Bewegung des Fahrzeugs entlang des erwarteten Fahrwegs vermutlich angefordert werden.

Ausgehend von der erwarteten Fahrzeugantriebsleistung werden mit Hilfe eines Modells 13 ausgehend von aktuellen Betriebskenngrößen wie beispielsweise der aktuellen Geschwindigkeit und von der erwarteten Fahrwegslast die für die Steuerung des Hybridantriebsstrangsystems 1 erforderlichen Steuergrößen ermittelt.

Ein Fahrer kann jederzeit Eingriffe 14 vornehmen und beispielsweise die Geschwindigkeit des Fahrzeugs erhöhen oder verringern wollen.

Mit einem Überprüfungsmodul 15 wird ausgehend von der erwarteten Fahrwegslast bzw. der erwarteten Fahrzeugantriebsleistung überprüft, ob bzw. mit welcher Wahrscheinlichkeit innerhalb des Vorhersagezeitraums ein ungünstiges Betriebsereignis wie beispielsweise ein Gangwechsel oder eine Steigerung der Geschwindigkeit nach einer längeren Fahrt ohne zugeschalteten Verbrennungsmotor 2 eintreten wird. Falls mit ausreichend hoher Wahrscheinlichkeit mit dem Überprüfungsmodul 15 ein ungünstiges Betriebsereignis identifiziert wird, wird eine Optimierungsnebenbedingung erzeugt und zusammen mit den aus dem Modell 13 ermittelten Steuergrößen an ein Optimierungsmodul 16 weitergeleitet.

In dem Optimierungsmodul 16 wird mit einem geeigneten Optimierungsverfahren eine angestrebte Ladezustandstrajektorie für einen zeitlichen Verlauf des Ladezustands der Energiespeichereinrichtung ermittelt. Das Optimierungsverfahren kann eine multikriterielle skalarisierte Optimierung oder ein anderes Optimierungsverfahren sein, welches für die Steuerung des Betriebs eines Hybridantriebsstrangsystems geeignet ist. Dabei müssen die Optimierungsnebenbedingungen, die gegebenenfalls mit dem Überprüfungsmodul 15 erzeugt wurden, berücksichtigt werden.

Die mit dem Optimierungsverfahren ermittelten bzw. veränderten Steuergrößen werden an ein Steuerungsmodul 17 übergeben, welches die Steuergrößen in Steuerbefehle umsetzt, mit welchen der Betrieb des Hybridantriebsstrangsystems 1 gesteuert wird.

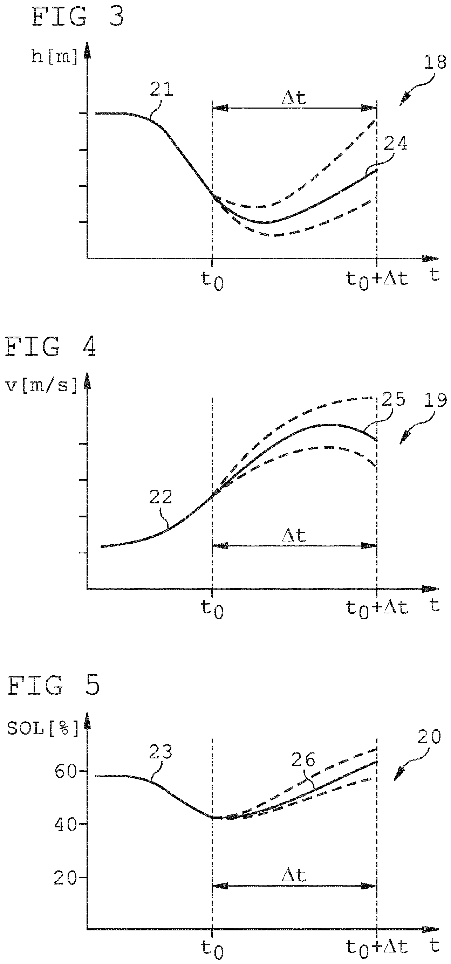

In den Figuren 3 bis 5 sind schematische Diagramme für die zeitlichen Verläufe bzw. Trajektorien eines Höhenprofils 18, eines Geschwindigkeitsprofils 19 und eines Ladezustandsprofils 20 dargestellt. Der aktuelle Istzustand ist zum Zeitpunkt to dargestellt. Während für die Vergangenheit t < to die tatsächlichen Kenngrößen des Höhenverlaufs 21 des zurückgelegten Fahrwegs, der Geschwindigkeit 22 und des Ladezustands 23 dargestellt sind, sind für den an to anschließenden Vorhersagezeitraum Δt jeweils der Höhenverlauf 24 für den als am meisten wahrscheinlich ermittelten Fahrweg innerhalb des Vorhersagezeitraums Δt, der Geschwindigkeitsverlauf 25 für die in Abhängigkeit von dem Fahrweg voraussichtlich zweckmäßige Geschwindigkeit innerhalb des Vorhersagezeitraums Δt und der für diesen Höhenverlauf 24 und diesen Geschwindigkeitsverlauf 25 voraussichtlich optimalen Ladezustand 26 jeweils innerhalb eines gestrichelt dargestellten oberen und unteren Grenzwerts dargestellt. Unter anderem diese Informationen bilden eine Grundlage für die Optimierung der Steuerung des Hybridantriebsstrangsystems 1, wobei ausgehend von diesen Informationen sowie weiteren Informationen mit einem geeigneten Optimierungsverfahren die Steuerung des Hybridantriebsstrangsystems 1 ermittelt und umgesetzt wird.

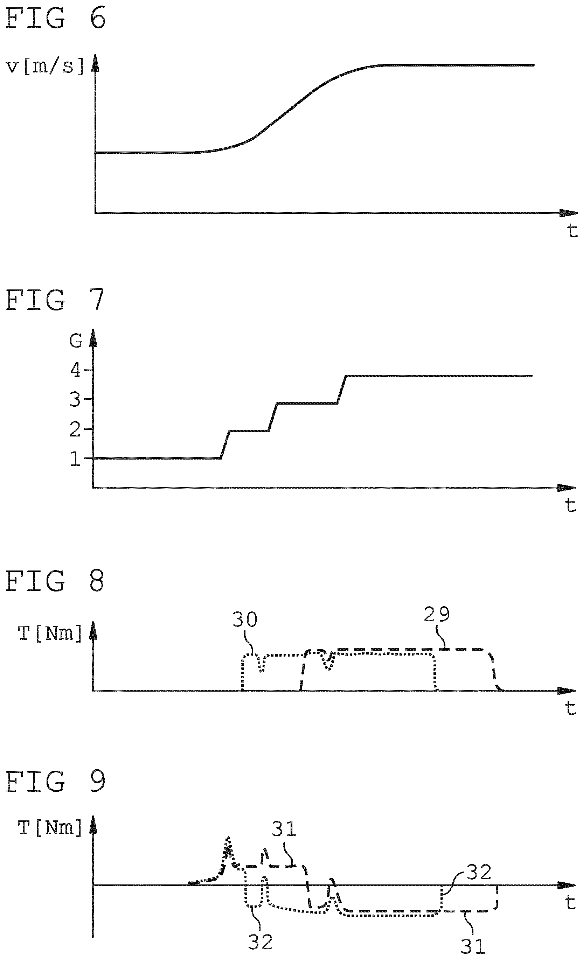

In den Figuren 6 bis 11 sind jeweils Diagramme für den zeitlichen Verlauf im Falle eines mehrfachen Gangwechsels dargestellt, nachdem der innerhalb des Vorhersagezeitraums Δt vorhergesagte mehrfache Gangwechsel von dem Überprüfungsmodul 15 als ein unmittelbar bevorstehendes ungünstiges Betriebsereignis identifiziert wurde.

Die in Figur 6 dargestellte Geschwindigkeit v soll sich beispielsweise wegen eines abfallenden Höhenverlaufs des erwarteten Fahrwegs innerhalb des Vorhersagezeitraums Δt deutlich erhöhen. Aus diesem Grund wird ein mehrfacher Wechsel des Gangs G des Hybridgetriebes 4 erwartet, wie er in Figur 7 dargestellt ist.

In den Figuren 8 bis 11 sind zum Vergleich die zeitlichen Verläufe einiger Kenngrößen dargestellt. Dabei zeigt die punktierte Linie in jedem Diagramm den zeitlichen Verlauf der betreffenden Kenngröße während des ungünstigen Betriebsereignisses, ohne dass die Optimierungsnebenbedingung vorgegeben wird. Im Vergleich dazu ist mit der gestrichelten Linie der zeitliche Verlauf der jeweiligen Kenngröße dargestellt, wenn erfindungsgemäß die Optimierungsnebenbedingung vorgegeben wird.

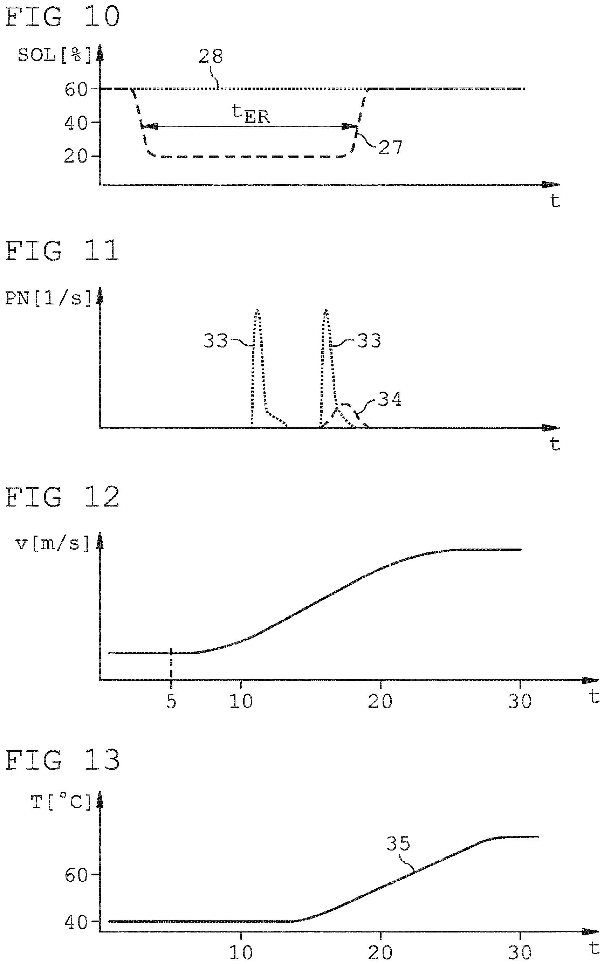

In Figur 8 ist der zeitliche Verlauf des mit dem Verbrennungsmotor 2 erzeugten Drehmoments T dargestellt. In Figur 9 ist der zeitliche Verlauf des mit der elektrischen Drehmomentmaschine 3 erzeugten oder als Generator aufgenommenen Drehmoments T dargestellt. In Figur 10 ist der zeitliche Verlauf der Vorgabe des Ladezustands SOC dargestellt, der eine wichtige Zielgröße für das Optimierungsverfahren darstellt. In Figur 11 ist der zeitliche Verlauf der Partikelemission PN als Kenngröße für eine unerwünschte Schadstoffemission dargestellt.

Nachdem das ungünstige Betriebsereignis des bevorstehenden mehrfachen Gangwechsels mit dem Überprüfungsmodul 15 erkannt wurde, wird als Optimierungsnebenbedingung für eine zeitlich begrenzte Ereignisreaktionsdauer t_{ER} eine deutliche Verringerung des Ladezustands SOC für eine Ladezustandstrajektorie 27 mit Optimierungsnebenbedingung auf etwa 20 % vorgegeben. Ohne die erfindungsgemäße Vorgabe der Optimierungsnebenbedingung würde eine ansonsten für die Optimierung vorgegebene Ladezustandstrajektorie 28 ohne Optimierungsnebenbedingung einen im Wesentlichen unveränderten Wert von 60 % kontinuierlich beibehalten.

Durch die mit der Optimierungsnebenbedingung veränderte Ladezustandstrajektorie 27 wird der für die Geschwindigkeitszunahme benötigte Leistungszuwachs zunächst deutlich länger ausschließlich von der elektrisch betriebenen Drehmomentmaschine 3 bereitgestellt und der Verbrennungsmotor 2 deutlich später angeschaltet. Dementsprechend ist bei einer Drehmomenttrajektorie 29 mit Optimierungsnebenbedingung des Verbrennungsmotors 2 ein deutlich später erfolgender Anstieg des Drehmoments und dafür auch ein späteres erneutes Abschalten des Verbrennungsmotors 2 erkennbar, während eine Drehmomenttrajektorie 30 ohne Optimierungsnebenbedingung ein früheres Anschalten und Abschalten des Verbrennungsmotors 2 erkennen lässt.

Der jeweils verbleibende Anteil der benötigten Antriebsleistung wird von der Drehmomentmaschine 3 erzeugt. Ausweislich einer Drehmomenttrajektorie 31 mit Optimierungsnebenbedingung wird über einen längeren Zeitraum innerhalb der Ereignisreaktionsdauer t_{ER} die benötigte Antriebsleistung vollständig von der Drehmomentmaschine 3 bereitgestellt und erst später nach dem Anschalten des Verbrennungsmotors 2 die Drehmomentmaschine 3 als Generator betrieben, um den Ladezustand der Energiespeichereinrichtung 7 wieder zu erhöhen. Im Vergleich dazu ist die Drehmomenttrajektorie 32 ohne Optimierungsnebenbedingung dargestellt.

Wenn die Optimierungsnebenbedingung vorgegeben wird, führt dies dazu, dass nicht nur der erste Gangwechsel von dem ersten Gang G in den zweiten Gang G, sondern auch noch der nachfolgende Gangwechsel von dem zweiten in den dritten Gang G ohne den bis dahin noch nicht zugeschalteten Verbrennungsmotor 2 durchgeführt werden kann. Eine unerwünschte Schadstoffemission, die während eines Gangwechsels unter Last regelmäßig vergleichsweise hoch ist, kann dadurch für den Gangwechsel von dem zweiten in den dritten Gang G vermieden werden. Erst bei dem Gangwechsel von dem dritten in den vierten Gang G ist der Verbrennungsmotor 2 zugeschaltet und deshalb ein in dem Schadstoffemissionsverlauf 33 ohne Optimierungsnebenbedingung für jeden Gangwechsel mit zugeschaltetem Verbrennungsmotor 2 deutlich erkennbarer Schadstoffemissionspeak unvermeidbar. Da die Drehmomentmaschine 3 auch diesen Gangwechsel mit der Optimierungsnebenbedingung stärker unterstützen kann als ohne Optimierungsnebenbedingung, ist der Schadstoffemissionsverlauf 34 mit Optimierungsnebenbedingung auch für diesen Gangwechsel deutlich geringer.

In den Figuren 12 bis 17 sind jeweils Diagramme für den zeitlichen Verlauf im Falle einer bevorstehenden Geschwindigkeitszunahme dargestellt, nachdem die innerhalb des Vorhersagezeitraums Δt vorhergesagte Geschwindigkeitszunahme von dem Überprüfungsmodul 15 wegen eines über einen langen Zeitraum abgeschalteten Verbrennungsmotors 2 als ein unmittelbar bevorstehendes ungünstiges Betriebsereignis identifiziert wurde.

Die in Figur 12 dargestellte Geschwindigkeit v soll sich beispielsweise wegen einer Zufahrt auf eine Autobahn mit einer deutlich erhöhten Reisegeschwindigkeit innerhalb des Vorhersagezeitraums Δt deutlich erhöhen. Aus diesem Grund wird die Zuschaltung des Verbrennungsmotors 2 benötigt. Da der Verbrennungsmotor 2 vor diesem Geschwindigkeitsanstieg über einen längeren Zeitraum nicht benötigt wurde und deshalb abgeschaltet war, ist die in Figur 13 dargestellte Betriebstemperatur T des Verbrennungsmotors 2 zunächst noch gering. Erst nach dem Anschalten des Verbrennungsmotors 2 erhöht sich dessen Betriebstemperatur, wie es schematisch in dem Temperaturverlauf 35 in Figur 13 gezeigt ist.

Eine hohe Lastübernahme durch den noch kühlen Verbrennungsmotor 2 ist mit einer höheren Schadstoffemission im Vergleich zu einer entweder geringeren Lastübernahme des kühlen Verbrennungsmotors 2 oder im Vergleich zu einer gleichhohen Lastübernahme des bereits auf einer hohen Betriebstemperatur befindlichen Verbrennungsmotor 2 verbunden. Im Hinblick auf eine reduzierte Schadstoffemission wird es deshalb als vorteilhaft erachtet, wenn der noch kühle Verbrennungsmotor 2 nicht gleich zu Beginn seines Zuschaltens ein hohes Drehmoment T erzeugen muss, sondern ein allmählich zunehmendes Drehmoment T erzeugen kann.

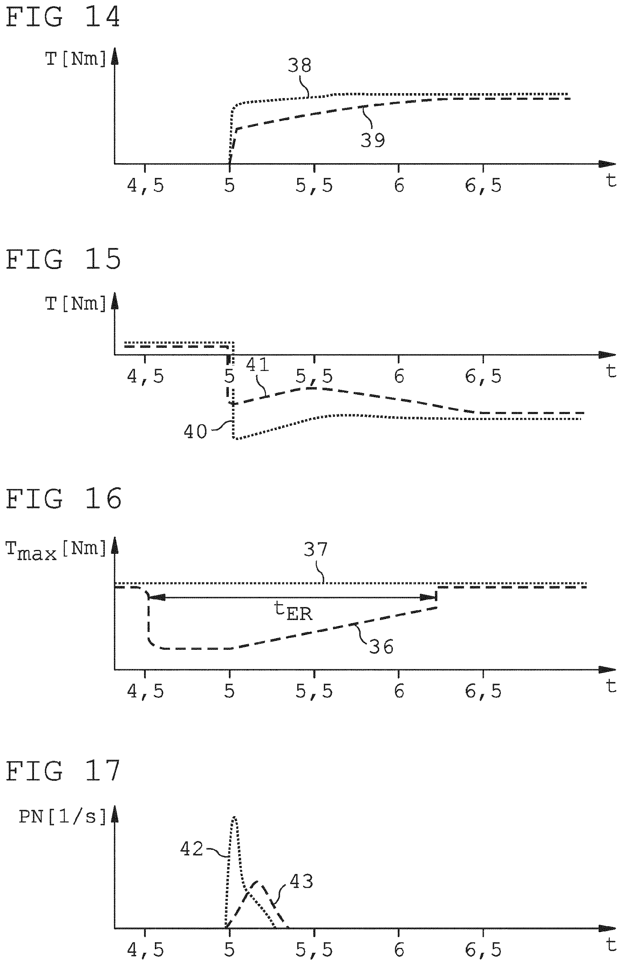

In den Figuren 14 bis 17 sind zum Vergleich die zeitlichen Verläufe einiger Kenngrößen dargestellt, allerdings in einer zeitlich gedehnten Darstellung und nur in einem Bereich von etwa 2,5 Sekunden um den unmittelbaren Beginn der Geschwindigkeitszunahme bei t = 5s. Dabei zeigt die punktierte Linie in jedem Diagramm den zeitlichen Verlauf der betreffenden Kenngröße während des ungünstigen Betriebsereignisses, ohne dass die Optimierungsnebenbedingung vorgegeben wird. Im Vergleich dazu ist mit der gestrichelten Linie der zeitliche Verlauf der jeweiligen Kenngröße dargestellt, wenn erfindungsgemäß die Optimierungsnebenbedingung vorgegeben wird.

In Figur 14 ist der zeitliche Verlauf des mit dem Verbrennungsmotor 2 erzeugten Drehmoments T dargestellt. In Figur 15 ist der zeitliche Verlauf des mit der elektrischen Drehmomentmaschine 3 erzeugten oder als Generator aufgenommenen Drehmoments T dargestellt. In Figur 16 ist der zeitliche Verlauf eines maximalen Drehmoments Tₘₐₓ 36 dargestellt, der sich durch die Vorgabe eines maximalen Drehmoments oder die Vorgabe eines maximalen Drehmomentgradienten ergibt, welches mit dem Verbrennungsmotor 2 erzeugt werden soll. Dabei ist in Figur 16 der Verlauf des maximal erlaubten Drehmoments Tₘₐₓ 36 mit Optimierungsnebenbedingung im Vergleich zu dem maximal erlaubten Tₘₐₓ 37 ohne Optimierungsnebenbedingung dargestellt, welches beispielsweise durch das Betriebsmanagement des verwendeten Verbrennungsmotors 2 vorgegeben wird. In Figur 17 ist der zeitliche Verlauf der Partikelemission PN als Kenngröße für eine unerwünschte Schadstoffemission dargestellt.

Kurz vor Beginn der Geschwindigkeitszunahme bei t = 5s wird als Optimierungsnebenbedingung das maximale Drehmoment des Verbrennungsmotors 2 für die Ereignisreaktionsdauer t_{ER} ganz erheblich gesenkt.

Da die elektrisch betriebene Drehmomentmaschine 3 bei Bedarf mehr elektrische Energie aus der Energiespeichereinrichtung 7 entnehmen kann übernimmt die Drehmomentmaschine 3 auch nach dem Anschalten des Verbrennungsmotors 2 zum Zeitpunkt t = 5s einen Anteil des für die Geschwindigkeitszunahme benötigten Leistungszuwachses. Der Verbrennungsmotor 2 muss deshalb unmittelbar nach seinem Zuschalten kurz nach t = 5s noch nicht die insgesamt notwendige Zunahme der Antriebsleistung übernehmen, sondern kann einen zunächst lediglich etwa halben Anteil übernehmen, der nachfolgend stetig bis zu einem für diese Geschwindigkeitszunahme ausreichenden Maximalwert zunimmt. In Figur 14 ist für den Verbrennungsmotor 2 der entsprechende Drehmomentverlauf 38 ohne Optimierungsnebenbedingung und der Drehmomentverlauf 39 mit Optimierungsnebenbedingung dargestellt. In Figur 15 ist für die Drehmomentmaschine 3 der entsprechende Drehmomentverlauf 40 ohne Optimierungsnebenbedingung und der Drehmomentverlauf 41 mit Optimierungsnebenbedingung dargestellt.

Auf Grund der verzögerten Übernahme der benötigten Antriebsleistung durch den noch kühlen Verbrennungsmotor 2 nach dessen Anschalten lässt sich die in Figur 17 dargestellte unerwünschte Schadstoffemission deutlich reduzieren, was ein Vergleich der Schadstoffemission 42 ohne Optimierungsnebenbedingung mit der Schadstoffemission 43 mit Optimierungsnebenbedingung zeigt.

## Patentansprüche

1. Verfahren zum Betreiben eines Fahrzeugs mit einem Hybridantriebsstrangsystem (1), wobei das Hybridantriebsstrangsystem (1) einen Verbrennungsmotor (2) und eine elektrisch betriebene Drehmomentmaschine (3) aufweist, die energieübertragend mit einer Energiespeichereinrichtung (7) verbunden ist, und wobei der Verbrennungsmotor (2) und die Drehmomentmaschine (3) von einer Steuereinrichtung (8) gesteuert und über ein Hybridgetriebe (4) mit einem Abtriebselement (5) verbunden sind, wobei das Verfahren umfasst, dass für einen Vorhersagezeitraum Δt ausgehend von einem erwarteten Fahrwegverlauf eine erwartete Fahrwegslast abgeschätzt wird, dass unter Berücksichtigung der erwarteten Fahrwegslast eine erwartete Fahrzeugantriebsleistung abgeschätzt wird, dass eine angestrebte Ladezustandstrajektorie (26) für einen zeitlichen Verlauf des Ladezustands der Energiespeichereinrichtung (7) ermittelt wird, und dass der Betrieb des Hybridantriebsstrangsystems (1) bei Berücksichtigung der abgeschätzten erwarteten Fahrzeugantriebsleistung unter Verwendung eines Optimierungsverfahrens im Hinblick auf die angestrebte Ladezustandstrajektorie (26) optimiert und von der Steuereinrichtung (8) gesteuert wird, **dadurch gekennzeichnet, dass** für vorab festgelegte ungünstige Betriebsereignisse jeweils mindestens eine Optimierungsnebenbedingung vorgegeben wird, dass ausgehend von der abgeschätzten erwarteten Fahrzeugantriebsleistung abgeschätzt wird, ob innerhalb eines Ereignisvorhersagezeitraums ein ungünstiges Betriebsereignis eintreten wird, und dass im Falle eines voraussichtlich eintretenden ungünstigen Betriebsereignisses über eine zeitlich begrenzte Ereignisreaktionsdauer t_{ER} hinweg mindestens eine diesem ungünstigen Betriebsereignis zugeordnete Optimierungsnebenbedingung für die Steuerung des Betriebs des Hybridantriebstrangsystems (1) vorgegeben wird.

2. Verfahren nach Anspruch 1, **dadurch gekennzeichnet, dass** mindestens ein vorab festgelegtes ungünstiges Betriebsereignis eine erhöhte Schadstoffemission bewirken würde, und dass mit der zugeordneten Optimierungsnebenbedingung eine demgegenüber reduzierte Schadstoffemission bewirkt wird.

3. Verfahren nach Anspruch 1 oder Anspruch 2, **dadurch gekennzeichnet, dass** mindestens ein vorab festgelegtes ungünstiges Betriebsereignis eine ungünstige Temperaturentwicklung innerhalb des Hybridantriebsstrangsystems (1) oder einen ungünstigen Zustand der Energiespeichereinrichtung (7) bewirken würde, und dass mit der zugeordneten Optimierungsnebenbedingung eine demgegenüber günstigere Entwicklung der Temperatur oder des Zustands der Energiespeichereinrichtung (7) bewirkt wird.

4. Verfahren nach einem der vorangehenden Ansprüche, **dadurch gekennzeichnet, dass** anhand einer vorgegebenen Priorisierung eine der diesen ungünstigen Betriebsereignissen zugeordneten Optimierungsnebenbedingungen ausgewählt und für die Steuerung des Betriebs des Hybridantriebsstrangsystems (1) vorgegeben wird, falls dem ermittelten ungünstigen Betriebsereignis mehr als eine Optimierungsnebenbedingung zugeordnet ist.

5. Verfahren nach einem der vorangehenden Ansprüche, **dadurch gekennzeichnet, dass** anhand einer vorgegebenen Priorisierung eine zugeordnete Optimierungsnebenbedingungen ausgewählt und für die Steuerung des Betriebs des Hybridantriebsstrangsystems (1) vorgegeben wird, falls mehr als ein ungünstiges Betriebsereignis innerhalb des Ereignisvorhersagezeitraums ermittelt wird.

6. Verfahren nach einem der Ansprüche 4 oder 5, **dadurch gekennzeichnet, dass** während des Betriebs des Hybridantriebsstrangsystems (1) Betriebskenngrößen erfasst werden, und dass ausgehend von den erfassten Betriebskenngrößen die Priorisierung der zugeordneten Optimierungsnebenbedingungen überprüft und gegebenenfalls geändert wird.

7. Verfahren nach einem der vorangehenden Ansprüche, **dadurch gekennzeichnet, dass** für jede Optimierungsnebenbedingung eine zugeordnete Ereignisreaktionsdauer t_{ER} vorgegeben ist.

8. Verfahren nach einem der vorangehenden Ansprüche 1 bis 6, **dadurch gekennzeichnet, dass** im Falle eines voraussichtlich eintretenden ungünstigen Betriebsereignisses während einer vorgegebenen maximalen Reaktionsdauer Optimierungskenngrößen erfasst werden, und dass die Ereignisreaktionsdauer t_{ER} beendet wird, sobald die erfassten Optimierungskenngrößen ein vorgegebenes Ereignisreaktionsbeendigungskriterium erfüllen.

9. Hybridantriebsstrangsystem (1) für ein Fahrzeug, wobei das Hybridantriebsstrangsystem (1) eine Steuereinrichtung (8), einen nicht elektrisch betriebenen Antriebsmotor (2) und eine elektrisch betriebene Drehmomentmaschine (3) aufweist, die energieübertragend mit einer Energiespeichereinrichtung (7) verbunden ist, und wobei der Antriebsmotor (2) und die Drehmomentmaschine (3) von der Steuereinrichtung (8) gesteuert und über ein Hybridgetriebe (4) mit einem Abtriebselement (5) verbunden sind, **dadurch gekennzeichnet, dass** die Steuereinrichtung (8) derart eingerichtet ist, dass bei einem Betrieb des Hybridantriebsstrangsystems (1) ein in den Ansprüchen 1 bis 8 definiertes Verfahren durchgeführt wird.
